Europäisches Patentamt

European Patent Office

Office européen des brevets

(19)

(11) Veröffentlichungsnummer: **0 174 618**
**B1**

(12) **EUROPÄISCHE PATENTSCHRIFT**

(45) Veröffentlichungstag der Patentschrift :
25.05.88

(51) Int. Cl.⁴ : **G 01 G 21/23**

(21) Anmeldenummer : 85111293.8

(22) Anmeldetag : 06.09.85

(54) **Waage mit durch Laststützen abgestütztem Lastträger.**

(30) Priorität : 14.09.84 DE 3433829

(43) Veröffentlichungstag der Anmeldung :
19.03.86 Patentblatt 86/12

(45) Bekanntmachung des Hinweises auf die Patenterteilung : 25.05.88 Patentblatt 88/21

(84) Benannte Vertragsstaaten :
**CH FR GB IT LI NL**

(56) Entgegenhaltungen :
**EP-A- 0 065 176**
**EP-A- 0 093 221**
**DE-A- 3 211 125**

(73) Patentinhaber : **August Sauter GmbH**
**Gartenstrasse 86**
**D-7470 Albstadt 1-Ebingen (DE)**

(72) Erfinder : **Backu, Konrad, Dipl.-Ing.**
**Herderstrasse 41**
**D-7470 Albstadt 1 (DE)**
Erfinder : **Ast, Adolf**
**Zeppelinstrasse 32**
**D-7475 Messstetten (DE)**
Erfinder : **Mogg, Herbert**
**Kolpingstrasse 17**
**D-7488 Stetten a.k.M. (DE)**

(74) Vertreter : **Patentanwälte Leinweber & Zimmermann**
**Rosental 7/II Aufg.**
**D-8000 München 2 (DE)**

Jouve, 18, rue St-Denis, 75001 Paris, France

## Beschreibung

Die Erfindung betrifft eine Waage mit einem Lastträger, der über Laststützen mittelbar oder unmittelbar auf einem oder mehreren, das Meßglied beaufschlagenden Lasthebeln abgestützt ist.

Bei Plattformwaagen mit ebenem Lastträger und Hybridbauweise (Beaufschlagung einer Meßzelle über Lasthebel) wird im allgemeinen der Lastträger an vier Eckstellen am Lasthebelsystem der Waage abgestützt. Die Qualität dieser Abstützung beeinflußt die Meßeigenschaften der Waage sowie ihre Robustheit im Betrieb wesentlich.

Bekannte Laststützen für die Übertragung der auf den Lastträger einwirkenden Kräfte auf das Lasthebelsystem sind Pendelgehänge, Kugelstütze und Pendelstütze. Bei allen diesen Laststützen bestehen die Stützteile aus Metall. Die Kontaktflächen müssen dabei aufwendig bearbeitet (geschliffen) werden und bedürfen der häufigen Wartung durch Schmieren und Reinigen. Weiter ist diese Art der Lastabstützung in vertikaler Richtung starr, so daß Vertikalstöße, wie sie beispielsweise beim plötzlichen Aufsetzen einer Last auf den Lastträger entstehen können, ungedämpft auf die Lasthebel übertragen werden. Derartige Stoßbelastungen des Lasthebelsystems können zu dessen Beschädigung führen. Seitliche Auslenkungen in horizontaler Richtung können überdies bei dieser Art der Lastabstützung zu lang anhaltenden Schaukelbewegungen des Lastträgers führen und so das Arbeiten erschweren.

Es ist auch schon bekannt, als Laststütze ein zylindrisches Elastomerteil zu verwenden, das beidendig sandwichartig zwischen Metallscheiben eingebracht ist, die die Abstützenden bilden. Dabei ist ein Abstützende eine ebene Metallplatte, die fest mit dem Lastträger verbunden ist, während das anderseitige Abstützende aus Metall als Kegel ausgebildet ist, der in einer entsprechenden Ausnehmung des Lasthebelsystems ruht. Eine derartige, zumindest einseitig am Lastträger (oder dem Lasthebelsystem) befestigte Laststütze kann nicht in vertikaler Richtung um ein Vielfaches steifer sein als in horizontaler Richtung. Es ist deshalb bei solchen Laststützen bei relativ weicher Laststütze die vertikale Einfederung des Lastträgers zu groß, bei relativ harter Stütze keine Abfederung in Horizontalrichtung gegeben, so daß Seitenkräfte am Lastträger über die Laststütze auf das Lasthebelsystem übertragen werden und dieses beschädigen.

Aufgabe der Erfindung ist es deshalb, eine das Lasthebelsystem derartiger Waagen schützende Laststützenkonstruktion vorzuschlagen, die einfach herzustellen und zu warten ist.

Diese Aufgabe wird erfindungsgemäß dadurch gelöst, daß die Abstützenden der im übrigen starren Laststütze zumindest einseitig, vorzugsweise beidseitig aus elastischem Material bestehen. Dabei werden zweckmäßig Form und Material der elastischen Enden der Laststütze so gewählt, daß eine eindeutige Beziehung zwischen vertikaler Kraft der Last und vertikalem Federweg besteht. Sind vertikale Kraft und vertikaler Federweg innerhalb des Wägebereichs zueinander proportional, so ergeben sich besonders einfache Anzeigeverhältnisse.

Die Laststütze kann aus einem Metallteil als Mittelteil und einem Elastomerteil als Abstützende bestehen. Stattdessen ist es auch möglich, die Laststütze aus einem relativ starren Kunststoffteil größerer Härte und Kunststoffteilen geringerer Härte als Abstützende herzustellen. Schließlich kann die Laststütze auch aus einem durchgehend gleichen Elastomeren gefertigt sein. Dann muß aber durch Einschließung des mittleren Bereiches des Elastomerteils in ein Metallrohr für die notwendige Steifheit des Mittelteils gesorgt werden.

Man erkennt, daß in allen diesen Fällen die frei zwischen den Lastträger und das Lasthebelsystem oder einem Zwischenträger eingestellte Laststütze einen relativ starren Mittelteil mit elastischen Enden aufweist. Da die Abstützung über die elastischen Abstützenden erfolgt, entfällt die bisher für Schneiden, Pfannen oder dergleichen erforderliche Präzisionsbearbeitung bei der Herstellung. Da keine harten Flächen aufeinander zu liegen kommen, ist auch der Verschleiß gering. Unter diesen Umständen ist überdies auch keine Wartung und Reinigung nötig. Herstellung und Betrieb sind damit vereinfacht.

Es kommt aber hinzu, daß durch die Möglichkeit der Einfederung und der Vertikallast ein Schutz vor Überlastungen des Lasthebelsystems gegeben ist. Überdies läßt sich, da die durch die elastischen Abstützenden zur Verfügung gestellten Federwege beschränkt sind, die Einfederung in Vertikalrichtung nach der Erfindung günstig so auslegen, daß bei Überlast der Lastträger einfach auf den Grundrahmen aufläuft. Daneben werden aber auch einwirkende Horizontalkräfte schnell abgedämpft. Sie führen nämlich zu einer Kippbewegung der Laststütze unter lokaler Komprimierung der elastischen Abstützenden. Hierdurch werden horizontale Schläge stark gedämpft. Bei Überlast erfolgt wieder seitliches Ausweichen des Lastträgers bis zum Anschlag am Grundrahmen. Die gewählte Art der Lastabstützung bzw. der Laststütze ist also funktionsgerecht und zugleich ein wirksamer Überlastschutz des Lasthebelsystems gegen hartes Aufsetzen des Wägegutes und horizontale Schläge auf den Lastträger, deren Auswirken überdies rasch abgedämpft wird. Nach Aufhebung der Last kehrt der Lastrahmen sogleich in die Ursprungslage zurück.

Besonders günstig ist es, wenn die Laststütze zylindrisch ausgebildet ist. Sie ist in dieser Form einfach herzustellen und reagiert auf Horizontalbeanspruchungen unabhängig von der Angriffsrichtung völlig gleich. Dies gilt selbstverständlich auch für den Regelfall, bei dem Vertikal- und Horizontalkräfte gleichzeitig einwirken.

Der einfache Aufbau wird weiter dann unterstützt, wenn die Laststütze mit ihrem elastischen Ende in einen Stützteller eingestellt ist. Dieser kann für definierte Verformungsvorgänge des elastischen Endes sorgen und zugleich trotz der erfindungsgemäß lose in ihn eingestellten Stütze für eine gewisse Fixierung der Laststütze am Lastträger bzw. am Zwischenträger oder dem Lasthebelsystem sorgen. Hierfür wird der Stützträger zweckmäßig am Lastträger, am Lasthebel oder am Zwischenträger befestigt.

Die erläuterte Funktion des Stütztellers wird dann noch unterstützt, wenn er die Laststütze allseitig becherartig umfaßt. Bei zylindrisch ausgebildeter Laststütze ist der Stützteller hierfür zweckmäßig suppentellerartig mit einem allseitig kegelförmig hochgezogenen Rand versehen. Dies führt bei entsprechender Durchmesseranpassung, bei der beispielsweise erfindungsgemäß der Durchmesser des Abstützendes der Laststütze zumindest gleich, vorzugsweise sogar geringfügig größer als der kleinere Durchmesser des kegelstumpfförmigen Stütztellers ist, zu einer selbsttätigen Zentrierung der in den Stützteller eingestellten Laststütze.

Wird der becherartige Stützteller zusätzlich noch mit einem allseitig hochgezogenen zylindrischen Rand versehen, so ist die Laststütze auch gegen seitliches Umfallen gut gesichert.

Trotz der einfachen Herstellung und des wartungsfreien Betriebs erhält man somit eine störungsfreie, gegen Überlast abgesicherte Übertragung der Kraft vom Lastträger auf das Lasthebelsystem.

Weitere Einzelheiten, Vorteile und Merkmale der Erfindung ergeben sich aus der folgenden Beschreibung der Zeichnungen, auf die wegen der erfindungswesentlichen Offerbarung hier unten nicht näher erläuterter Einzelheiten ausdrücklich verwiesen wird. Es zeigen :

Fig. 1 im Schnitt das Funktionsschema einer für den Einsatz der erfindungsgemäßen Laststützen bestimmten Waage,

Fig. 2 vereinfacht eine Ausführungsform der erfindungsgemäßen Lastträgerabstützung bei einer Plattformwaage,

Fig. 3 in größerem Maßstab die erfindungsgemäße Laststütze bei Einwirkung einer Vertikalkraft auf den Lastträger,

Fig. 4 eine Fig. 3 ähnliche Darstellung bei gleichzeitiger Einwirkung einer Vertikal- und einer Horizontalkraft auf den Lastträger,

Fig. 5 eine abgewandelte Ausführungsform, bei der die Laststütze nur einseitig ein elastisches Abstützende aufweist,

Fig. 6 eine abgewandelte Ausführungsform.

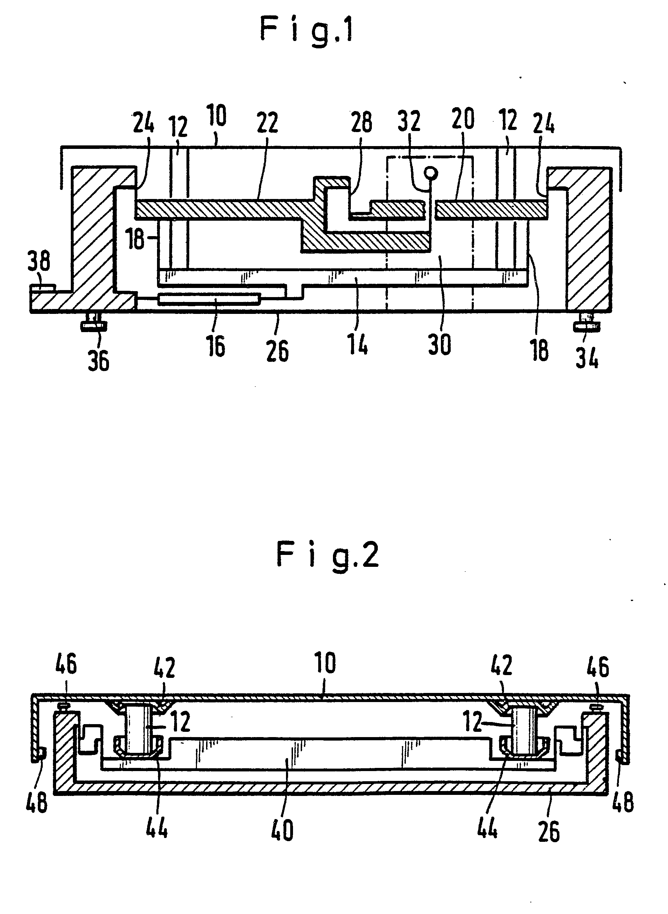

Fig. 1 zeigt einen für die Aufnahme der Wägelast bestimmten Lastträger 10, der über Laststützen 12 auf einem Zwischenträger 14 abgestützt ist. Horizontalbewegungen des Zwischenträgers 14 werden durch einen mit elastischen Gelenken ausgestatteten Lenker 16 verhindert.

Die über die Laststützen 12 in den Zwischenträger 14 eingeleitete Last wird über elastische Bänder 18 auf die beiden Lasthebel 20 und 22 übertragen. Die Lasthebel 20 und 22 sind je mit Hilfe eines elastischen Bandes 24 ortsfest am Grundrahmen 26 gelagert und in der Waagenmitte miteinander über eine elastische Koppel 28 verbunden. Eine Verlängerung des Lasthebels 22 ist überdies dazu bestimmt, die Verbindung mit der Meßzelle 30 über eine elastische Koppel 32 herzustellen. Die Meßzelle 30 kann auf bekannte Weise aufgebaut sein.

Der Grundrahmen 26 stützt sich über Stellfüße 34, 36 auf der Stellfläche ab. Eine Libelle 38 dient zur Kontrolle einer über die Stellfüße 34, 36 nivellierten Aufstellung der Waage.

Fig. 2 zeigt nun das Waagesystem vereinfacht, dafür die erfindungsgemäßen Laststützen 12 verdeutlicht. Auch hier ist wieder der Lastträger 10 über die Laststützen 12 zur Krafteinleitung auf das Lasthebelsystem 40 aufgelegt, das seinerseits am Grundrahmen 26 aufgehängt ist. Der genaue Aufbau der Laststützen 12 wird unten anhand der folgenden Figuren im einzelnen erläutert werden. Schon hier ist aber zu erkennen, daß die Laststützen 12 oberendig in auf der Unterseite des Lastträgers 10 befestigte Stützteller 42 und unterenendig in Stützbecher 44 frei beweglich eingestellt sind, die mit dem Lasthebelsystem 40 oder dem Zwischenträger 14 verbunden sind.

Schon hier erkennt man, daß die Stützteller 42 etwa suppentellerartig als sich nach unten öffnender Kegelstumpfmantel ausgebildet sind. Die sich nach oben öffnenden Stützbecher 44 weisen zusätzlich einen nach oben gezogenen zylindrischen Rand auf, der sich bis nahe zur Mitte der Längserstreckung der Laststütze 12, jedenfalls aber bis über 30 % ihrer Gesamthöhe erstreckt.

In der Fig. 2 erkennt man weiter auf der Oberseite des Grundrahmens 26 im Bewegungsbereich des Lastträgers 10 angeordnete Überlastanschläge 46 und auf der Innenseite des nach unten abgekröpften seitlichen Randes des plattformartigen Lastträgers 10 zum Grundrahmen 5 hin vorstehende Seitenanschläge 48.

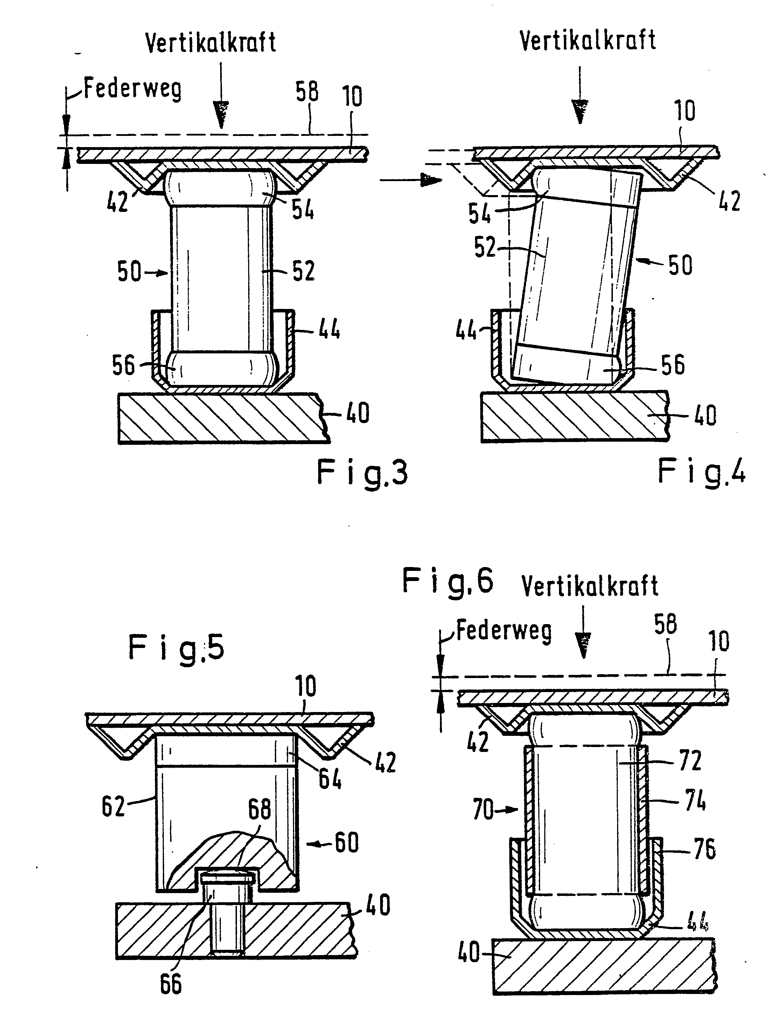

Fig. 3 zeigt eine erste Ausführungsform einer Laststütze 50, die durch eine reine Vertikalkraft beaufschlagt ist.

Die Laststütze 50 besteht aus einem zylindrischen Metallteil 52 als Mittelteil. Hingegen bestehen die beidseitig am zylindrischen Metallteil angebrachten und in unbelastetem Zustand den gleichen Durchmesser aufweisenden kreisrunden Abstützenden 54 (am Lastträger 10) und 56 (am Lasthebelsystem 40) aus Elastomerteilen. Selbstverständlich kann an die Stelle des Metallteils 52 auch ein ebenso geformtes Teil aus einem anderen relativ harten Werkstoff, beispielsweise einem Kunststoff höherer Festigkeit treten.

Die Abmessungen (Durchmesser, Höhe) von Metallteil 52 und den aus Elastomerteilen bestehenden Abstützenden 54, 56, sowie die Elastomerhärte sind so gewählt, daß einer vorgegebenen vertikalen Kraft ein und nur ein bestimmter vertikaler Federweg entspricht. Dadurch erhält man eine eindeutige Beziehung zwischen der Vertikalkraft und dem vertikalen Federweg. Dieser ist durch die durch eine Strichlinie 58 angedeutete Ruhelage der oberen Begrenzung des Lastträgers 10 in unbelastetem Zustand und die in Fig. 3 gezeigte belastete Stellung angedeutet.

In Fig. 3 ist auch zu erkennen, daß der sich nach unten kegelstumpfförmig öffnende Stützteller 42 am Lastträger 10 und der in seinem Basisbereich am Lasthebelsystem 40 ebenso ausgebildete Stützbecher 44 in ihrer kreisrunden ebenen Bodenplatte den gleichen Durchmesser aufweisen, wie die Laststütze 50 bzw. deren elastische Abstützenden 54 und 56. Dies führt schon bei unbelasteter Waage durch den kegelförmigen Rand von Stützteller 42 und Stützbecher 44 zu einer Zentrierung der Laststützen 50.

Fig. 4 zeigt die Ausführungsform nach Fig. 3 bei Einwirken einer vertikalen und einer horizontalen Kraft. Hier kommt es zu einer Kippbewegung der Laststützen 50. Diese ermöglicht die Seitenauslenkung des Lastträgers 10 bei wesentlich kleineren Seitenkräften als sie für die Komprimierung der als Elastomerteile ausgebildeten Abstützenden 54, 56 durch die Vertikalkraft erforderlich sind.

Selbstverständlich erfolgt bei der gewählten Konstruktion der Laststützen 50 nach Fortfall der Vertikal- oder Horizontalkräfte eine Rückstellung der Laststützen in den Ausgangszustand aufgrund der Elastizität der Abstützenden.

Es sei an dieser Stelle ausdrücklich darauf hingewiesen, daß durch den gewählten Aufbau der Laststützen mit starrem Mittelteil und elastischen Abstützenden es erst ermöglicht wird, eine Lastabstützung zu erhalten, die in vertikaler Richtung um ein Vielfaches steifer ist als in horizontaler Richtung. Bei den Laststützen 50 sind hierfür beispielsweise folgende Wertpaare erreichbar.

vertikal : 600 kg — 3 mm Federweg
horizontal : 20 kg — 5 mm Ausweichweg

Solche Werte waren bisher für derartige Abstützungen des Lastträgers nicht zu erzielen. Sie beeinflussen aber wesentlich positiv die Meßeigenschaften und die Gebrauchsrobustheit derartiger Waagen.

Fig. 5 zeigt eine weitere Ausführungsform mit einer Laststütze 60. Diese weist wieder ein zylindrisches Metallteil 62 auf, das hier aber nur einseitig, nämlich in den in den Stützteller 42 am Lastträger 10 eingestellten Ende ein elastisches Abstützende 64 aus einem Elastomerteil aufweist. Dieses ist in der Figur im unbelasteten Zustand gezeigt. Man erkennt wieder gut, daß der Durchmesser der zylindrischen Laststütze 60 mit demjenigen der kreisrunden horizontalen Bodenplatte des Stütztellers 42 übereinstimmt. Auf der gegenüberliegenden Seite, also am Lasthebelsystem 40 stützt sich die Laststütze 60 hier jedoch mit einer harten Punktauflage ab, die aus einem vom Lasthebelsystem 40 nach oben in eine Ausnehmung im Fuß der Laststütze 60 vorstehenden Stütze 66 mit in Form einer Kugelkalotte bombierten Stützkopf 68 besteht.

Fig. 6 zeigt eine Fig. 3 ähnliche Darstellung einer anderen Ausführungsform. Hier besteht die Laststütze 70 aus einem durchgehenden, vollen, zylindrischen Elastomerteil 72, dessen Mittelstück von einem Metallrohr 74 umspannt und versteift ist. Die überstehenden Enden des Elastomerteils 72, die außerhalb des Metallrohres 74 liegen, weisen wieder die notwendige Elastizität für das Herstellen der Federwege auf. Es liegt auf der Hand, daß diese Ausführungsform herstellungsmäßig besonders einfach ist.

In der Fig. 6 ist auch deutlich zu erkennen, daß der Stützbecher 44 ausgehend von seinem mit dem Lasthebelsystem 40 verbundenen kegelstumpfförmigen Unterteil einen nach oben gezogenen zylindrischen Rand 76 aufweist, dessen Innendurchmesser den Außendurchmesser des zylindrischen Metallrohres 74 übersteigt. Der Durchmesserunterschied ist jedoch nur so groß, daß der bis zum Auflaufen auf die Seitenanschläge 48 notwendige Kippweg zur Verfügung steht. Weitere Verkippungen darüber hinaus sind nicht möglich. Vielmehr ist die Laststütze 70 (bzw. die Laststütze 50 nach Fig. 3) hierdurch zuverlässig gegen das Umfallen gesichert.

**Patentansprüche**

1. Waage mit einem Lastträger (10), der über Laststützen unmittelbar oder mittelbar auf einem oder mehreren das Meßglied beaufschlagenden Lasthebeln (20, 22) abgestützt ist, dadurch gekennzeichnet, daß die Abstützenden (54, 56 ; 64) der im übrigen starren Laststütze (50, 60, 70) zumindest einseitig, vorzugsweise beidseitig aus elastischem Material bestehen.

2. Waage nach Anspruch 1, dadurch gekennzeichnet, daß Form und Material des (der) Abstützendes(en) der Laststütze (50, 60, 70) so gewählt sind, daß eine eindeutige Beziehung zwischen vertikaler Kraft der Last und vertikalem Federweg besteht.

3. Waage nach Anspruch 2, dadurch gekennzeichnet, daß die vertikale Kraft und der vertikale Federweg innerhalb des Wägebereiches zueinander proportional sind.

4. Waage nach einem der Ansprüche 1 bis 3, dadurch gekennzeichnet, daß die Laststütze (50, 60) aus einem Metallteil (52, 62) als Mittelteil und an zumindest einem Ende aus einem Elastomerteil als Abstützende (54, 56 ; 64) besteht.

5. Waage nach einem der Ansprüche 1 bis 3, dadurch gekennzeichnet, daß die Laststütze aus einem Kunststoffteil größerer Härte als Mittelteil und Kunststoffteilen geringerer Härte als Abstützende besteht.

6. Waage nach einem der Ansprüche 1 bis 3, dadurch gekennzeichnet, daß die Laststütze (70) aus einem durchgehend aus dem gleichen Material bestehenden Elastomerteil (72) besteht, das im mittleren Bereich außen durch ein Metallrohr (74) versteift ist.

7. Waage nach einem der Ansprüche 1 bis 6, dadurch gekennzeichnet, daß die Laststütze (50, 60, 70) zylindrisch ausgebildet ist.

8. Waage nach einem der Ansprüche 1 bis 7, dadurch gekennzeichnet, daß die Laststütze (50, 60, 70) mit ihrem (n) elastischen Abstützende (n) in einen Stützteller (42, 44) eingestellt ist.

9. Waage nach Anspruch 8, dadurch gekennzeichnet, daß der Stützteller (42, 44) am Lastträger (10) und/oder am Lasthebel (20, 22) bzw. einem Zwischenträger (14) befestigt ist.

10. Waage nach Anspruch 7 und einem der Ansprüche 8 oder 9, dadurch gekennzeichnet, daß der Stützteller (42, 44) die Laststütze allseitig becherartig umfaßt, vorzugsweise einen allseitig kegelförmig hochgezogenen Rand hat.

11. Waage nach Anspruch 10, dadurch gekennzeichnet, daß der Durchmesser der Abstützenden (54, 56 ; 64) der Laststütze (52, 60, 70) zumindest gleich dem Bodendurchmesser des kegelförmigen Stütztellers (42, 44) ist.

12. Waage nach Anspruch 11, dadurch gekennzeichnet, daß der Stützteller (44) zusätzlich einen allseitig hochgezogenen zylindrischen Rand (76) aufweist.

**Claims**

1. A balance with a load support (10) supported directly or indirectly by means of load props on a lever arm or arms, (20, 22) actuating the measuring component, characterized in that the prop ends (54, 56 ; 64) of the otherwise rigid load props (50, 60, 70) are at least at one end and preferably at both ends made of an elastic material.

2. A balance in accordance with claim 2, characterized in that the shape and material selected for the prop end(s) of the load prop (50, 60, 70) is such that there is an unequivocal correlation between the vertical load force and the vertical travel stroke.

3. A balance in accordance with claim 2, characterized in that the vertical force and the vertical travel stroke are proportionate with one another in the weighing zone.

4. A balance in accordance with any one of claims 1 to 3, characterized in that the load prop (60, 60) has a metal part (52, 62) as the centre part and has a prop end (54, 56 ; 64) comprising an elastomer-type component at at least one end.

5. A balance in accordance with any one of claims 1 to 3, characterized in that the load prop (70) comprises an elastomer-type component as the centre part and plastic components that are less hard as the prop end.

6. A balance in accordance with any one of claims 1 to 3, characterized in that the load prop (70) comprises an elastomer-type component (72) made of the same material throughout that is stiffened in the centre part by a metal tube (74).

7. A balance in accordance with any one of claims 1 to 6, characterized in that the load prop (50, 60, 70) is cylindrical.

8. A balance in accordance with any one of claims 1 to 7, characterized in that the load prop (50, 60, 70) is installed at its elastic prop end (s) in a dish support (42, 44).

9. A balance in accordance with claim 8, characterized in that the dish support (42, 44) is affixed to the load support (10) and/or the lever arm (20, 22) or to an intermediate support (14).

10. A balance in accordance with claim 7 and either claim 8 or claim 9, characterized in that the dish support (42, 44) encloses the load prop all round like a cup, and preferably has a raised-up, conical rim all the way round.

11. A balance in accordance with claim 10, characterized in that the diameter of the prop ends (54, 56) of the load prop (52, 60, 70) is at least equal to the diameter at the bottom of the conical dish support (42, 44).

12. A balance in accordance with claim 11, characterized in that the dish support (44) also has an allround, raised-up cylindrical rim (76).

**Revendications**

1. Balance avec un porte-charge (10) qui est supporté, au moyen de colonnes de charge, directement ou indirectement sur un ou plusieurs leviers de charge (20, 22) sollicitant l'organe de mesure, caractérisée en ce que les extrémités de support (54, 56 ; 64) de la colonne de charge (50, 60, 70) par ailleurs rigide se composent au moins d'un côté, avantageusement des deux côtés, d'un matériau élastique.

2. Balance selon la revendication 1, caractérisée en ce que la forme et le matériau du (des) extrémité(s) de support de la colonne de charge (50, 60, 70) sont choisis de façon qu'il existe un rapport univalent entre la force verticale de la charge et la course élastique verticale.

3. Balance selon la revendication 2, caractérisée en ce que la force verticale et la course élastique verticale sont proportionnelles l'une à l'autre à l'intérieur du domaine de pesée.

4. Balance selon l'une quelconque des revendications 1 à 3, caractérisée en ce que la colonne de charge (50, 60) se compose d'une pièce en métal (52, 62) en tant que pièce centrale et au moins à une extrémité, d'une pièce en élastomère en tant qu'extrémité de support (54, 56 ; 64).

5. Balance selon l'une quelconque des revendications 1 à 3, caractérisée en ce que la colonne de charge se compose d'une pièce en matière synthétique d'une dureté plus importante, en tant que pièce centrale, et de pièces en matière synthétique de moindre dureté en tant qu'extrémité de support.

6. Balance selon l'une quelconque des revendications 1 à 3, caractérisée en ce que la colonne de charge (70) se compose d'une pièce en élastomère (72) continue dans le même matériau qui est renforcée, dans sa zone centrale, extérieurement, par un tube en métal (74).

7. Balance selon l'une quelconque des revendications 1 à 6, caractérisée en ce que la colonne de charge (50, 60, 70) est de configuration cylindrique.

8. Balance selon l'une quelconque des revendications 1 à 7, caractérisée en ce que la colonne de charge (50, 60, 70) est disposée, avec sa ou ses extrémités élastiques de support dans un plateau de support (42, 44).

9. Balance selon la revendication 8, caractérisée en ce que le plateau de support (42, 44) est fixé sur le porte-charge (10) et/ou sur le levier de charge (20, 22) ou respectivement sur un support intermédiaire (14).

10. Balance selon la revendication 7 et l'une quelconque des revendications 8 ou 9, caractérisée en ce que le plateau de support (42, 44) entoure, à la manière d'un godet, de tous côtés, la colonne de charge, a avantageusement un bord conique relevé de tous côtés.

11. Balance selon la revendication 10, caractérisée en ce que le diamètre des extrémités de support (54, 56 ; 64) de la colonne de charge (52, 60, 70) est au moins égal au diamètre du fond du plateau de support de forme conique (42, 44).

12. Balance selon la revendication 11, caractérisée en ce que le plateau de support (44) présente de plus un bord cylindrique relevé de tous côtés (76).

# Fig.1

# Fig.2

Vertikalkraft

Vertikalkraft

Federweg

58 10

10

42

54

54

42

52

52

50

50

44

44

56

56

40

40

**Fig.3**

**Fig.4**

**Fig.5**

**Fig.6** Vertikalkraft

Federweg

58 10

10

42

42

64

72

62

70

74

68

60

76

40

40

66

44